Europäisches Patentamt

**European Patent Office**

**Office européen des brevets**

(19)

(11) Numéro de publication: **0 223 970**
**B1**

(12) # FASCICULE DE BREVET EUROPÉEN

(45) Date de publication du fascicule du brevet:
27.12.89

(51) Int. Cl.⁴: **G 01 B 7/00**

(21) Numéro de dépôt: **86113324.7**

(22) Date de dépôt: **27.09.86**

(54) Dispositif de palpage pour une machine à mesurer des pièces conductrices montées sur une table de mesure.

(30) Priorité: **14.10.85 CH 4415/85**

(43) Date de publication de la demande:
**03.06.87 Bulletin 87/23**

(45) Mention de la délivrance du brevet:
**27.12.89 Bulletin 89/52**

(84) Etats contractants désignés:
**DE FR GB IT SE**

(56) Documents cité:
**EP-A-0 100 807**
**CH-A-599 534**
**FR-A-2 495 308**
**FR-A-2 531 648**
**GB-A-1 599 758**

(73) Titulaire: **TESA S.A., Rue Bugnon 38, CH- 1020 Renens (CH)**

(72) Inventeur: **Lüthi, Walter, Rohrgartenstrasse 15, CH- 9642 Ebnat- Kappel (CH)**

(74) Mandataire: **Misrachi, Alfred, 15, Ch. de la Plantaz, CH- 1024 Ecublens (CH)**

LIBER, STOCKHOLM 1989

## Description

La présente invention a pour objet un dispositif de palpage pour une machine à mesurer des pièces conductrices montées sur une table de mesure et isolées de celle-ci et comportant un boîtier destiné à être fixé à un support mobile de la machine, un palpeur à touche de mesure solidaire du boîtier et destiné à palper une pièce à mesurer par déplacement du support mobile, un mécanisme de liaison spatiale du palpeur avec le boîtier susceptible d'être déformé élastiquement sous l'effet d'un dépassement d'une pression déterminée de la touche du palpeur contre la pièce à mesurer, et un circuit électrique influencé par le contact de la touche du palpeur contre la pièce à mesurer pour produire une impulsion électrique.

Ce dispositif de palpage est destiné à être utilisé plus particulièrement mais cependant non exclusivement sur les machines pour la mesure tridimensionnelle de pièces mécaniques en cours d'usinage ou usinées, par référence à trois axes de coordonnées rectangulaires.

Sur ces machines, la position relative du boîtier du dispositif de palpage auquel est lié le palpeur à touche de mesure est détectée par des capteurs par référence aux trois axes de coordonnées et calculée par un calculateur. Lors du contact de la touche du palpeur avec un élément d'une pièce à mesurer montée sur la table de mesure, l'impulsion produite par le circuit électrique constitue une prise de donnée pour le calculateur qui permet de mémoriser la position relative du boîtier atteinte à ce moment, cette position étant utilisée pour l'initialisation ou l'arrêt du comptage de la mesure à effectuer selon le processus de mesure appliqué.

Le mécanisme de liaison spatiale du palpeur avec le boîtier est susceptible d'être déformé élastiquement afin de permettre au palpeur de se déplacer dans une certaine mesure et sous l'effet d'une pression déterminée par rapport au boîtier lors de l'impact de la touche de mesure contre la pièce à mesurer. Cette particularité est prévue afin d'éviter une déformation ou une rupture mécanique consécutive à un retard dans l'arrêt du déplacement du boîtier lors de cet impact.

L'impulsion électrique de mesure est produite de façons différentes selon le type de ces machines et sert également sur certaines d'entre elles à interrompre automatiquement le déplacement du support du boîtier lorsque celui-ci est télécommandé.

Sur une machine à mesurer décrite dans la demande de brevet français publiée No 2 303 267, la touche de mesure est fixée à un tube monté mobile élastiquement dans le corps du palpeur par le moyen d'un dispositif palier constitué par une lame de ressort annulaire plane ancrée fermement par son bord intérieur au tube de la touche de mesure et par son bord extérieur au corps du palpeur.

L'extrémité du tube opposée à la touche de mesure coopère avec le doigt d'actionnement d'un micro-interrupteur pour actionner ce dernier et provoquer l'impulsion électrique de mesure dès le plus petit déplacement du tube provoqué par la rencontre de la touche de mesure avec l'objet à mesurer. Pour des déplacements excédentaires consécutifs à un éventuel retard dans l'arrêt du déplacement du boîtier mobile le tube vient en butée à l'intérieur du corps du palpeur et le mécanisme de liaison liant élastiquement ce dernier au boîtier mobile joue son rôle de sécurité.

Ce dispositif de palpage est intéressant par la conception simple du dispositif palier qui constitue en un seul élément élastique un palier sphérique permettant des mouvements de pivotement de la tige de la touche de mesure dans l'ensemble du système de mesure à trois axes de coordonnées. Cependant, pour assurer la précision et la fiabilité d'un tel dispositif, la rigidité de la lame de ressort annulaire doit être prévue inférieure à celle du rappel élastique du mécanisme de liaison et supérieure à celle du micro-interrupteur. La conformation de coopération entre le doigt du micro-interrupteur et l'extrémité du tube qui l'actionne requiert une très grande précision dans son exécution, un jeu minimal devant être prévu nécessairement entre ces deux éléments autant pour en limiter la course relative inactive que pour éviter la transmission d'oscillations dues à d'éventuels ébranlements du boîtier et/ou du palpeur consécutifs à l'arrêt du déplacement du boîtier ou à d'autres phénomènes perturbateurs.

De ces faits, la fiabilité d'un tel dispositif est tributaire de réglages très fins et d'une construction délicate dont la complexité ne se prête guère à la miniaturisation qui est de plus en plus recherchée dans ce domaine. En outre, si la précision en soi est bonne, le degré de précision des mesures effectuées est par contre affecté par le fait que l'initialisation et l'arrêt du comptage de mesure ne sont déclenchés par l'impulsion électrique de mesure que consécutivement à une déformation, aussi petite soit-elle, du système palier liant spatialement la touche de mesure au corps du palpeur, déformation dont l'amplitude n'est pas nécessairement répétitive et de ce fait impossible à quantifier de manière sûre pour constituer une donnée de correction pour le calculateur.

Dans un autre dispositif de palpage connu décrit dans le brevet américain No 3 945 124, la touche du palpeur est reliée au boîtier par l'intermédiaire d'un dispositif palier constitué par l'association de parallélogrammes déformables élastiquement arrangés selon les trois directions des trois axes référentiels de coordonnées, et des capteurs de déformation sont associés à chacun d'eux pour produire un signal de mesure significatif de la rencontre de la touche de mesure avec la pièce à mesurer. Ce dispositif présente par sa complexité le même inconvénient que le précédent vis-à-vis de la tendance actuelle à la miniaturisation, et le degré de précision des mesures effectuées est ici également affecté par le fait qu'un signal de mesure n'est donné que consécutivement à une déformation de l'un ou de l'autre des parallélogrammes déformables du dispositif palier.

Dans un dispositif de palpage également connu, décrit dans le brevet suisse No 599 534, la touche du palpeur est reliée à une source de courant électrique de manière à ce qu'au moment précis de son entrée en contact avec la pièce conductrice à mesurer le circuit d'alimentation se ferme et produise un signal significatif de cette entrée en contact. De la sorte, l'impulsion de mesure est ici produite sans nécessiter le moindre déplacement relatif entre le palpeur et le boîtier mobile, contrairement aux deux dispositifs de palpage connus décrits précédemment, et ceci est avantageux dans la recherche d'une haute précision. Ce dispositif se prête aussi avantageusement par sa simplicité à la miniaturisation.

Cependant, le processus de création du signal de mesure par fermeture d'un circuit d'alimentation électrique nécessite la liaison par câble de la pièce conductrice à mesurer à l'un des pôles de ce circuit. Cette liaison par câble est peu fiable et constitue une gêne considérable dans le déroulement du processus d'auscultation de la pièce à mesurer pendant lequel il est parfois nécessaire de contourner celles-ci. Par ailleurs, dans le cas de l'interposition d'une impureté entre la touche de mesure et la pièce à mesurer, ou bien également dans le cas de l'entrée en contact de la touche de mesure avec une partie isolée ou un élément isolant de la pièce, aucun signal de mesure n'est produit. Dans ces cas il peut en résulter un excès de déplacement du boîtier mobile qui aurait pour effet d'endommager le dispositif de palpage par dépassement de la course élastique de sécurité du dispositif de liaison.

Enfin, dans un dispositif de palpage décrit dans la demande de brevet français N° 2 495 308, la touche du palpeur est aussi reliée à une source de courant électrique reliée par ailleurs à la pièce conductrice devant être contrôlée; lorsque la touche se rapproche de la pièce, la résistance du circuit ainsi constitué diminue et, à une distance prédéterminée entre la touche et la pièce, cette résistance atteint une valeur seuil à partir de laquelle est déclenché un signal sonore ou lumineux pour indiquer à l'opérateur qu'il doit arrêter le déplacement de la machine portant le palpeur. En cas de contrôle automatique de pièces successives à partir des dimensions enregistrées d'une pièce-étalon, il y a risque de collision du palpeur contre toute pièce présentant une surépaisseur par rapport à la pièce-étalon; aussi, pour éviter la détérioration du palpeur, celui-ci comporte un équipage à cône d'appui et rappel à ressort lui permettant une certaine déformation élastique.

Comme dans le cas du dispositif selon le brevet suisse N° 599 534, il y a en principe émission d'un signal sans déplacement relatif entre le palpeur et le boîtier qui le supporte, mais aussi avec la nécessité d'un liaison par câble entre la pièce à mesurer et le circuit d'alimentation électrique; en outre, en cas d'impuretés entre la touche et la pièce, la valeur seuil de la résistance à partir de laquelle est déclenché le signal peut être modifiée.

L'invention a pour but la réalisation d'un dispositif de palpage du genre décrit en début d'exposé qui soit simple et fiable, de grande précision, se prêtant à la miniaturisation et dépourvu des inconvénients précités.

A cet effet, le dispositif de palpage selon l'invention est caractérisé en ce que la touche du palpeur est isolée par rapport au boîtier, en ce que le circuit électrique comprend un amplificateur capacitif relié à la touche du palpeur pour précharger celle-ci à une tension déterminée et comporte des dispositifs électroniques sensibles à un déplacement de charge entre la touche du palpeur et la pièce à mesurer pour produire une impulsion électrique de mesure significative de l'entrée en contact de la touche du palpeur avec la pièce à mesurer, et en ce qu'un agencement de sécurité sensible à la déformation élastique du mécanisme de liaison produit une impulsion électrique de sécurité significative d'une éventuelle déformation élastique de ce mécanisme

De la sorte, la création de l'impulsion électrique de mesure n'est tributaire d'aucun mécanisme encombrant et délicat à régler et ne nécessite pas non plus la liaison par câble de la pièce à mesurer, puisque cette impulsion est produite par un amplificateur capacitif apte à déceler tout déplacement de charge entre la touche de mesure et la pièce à mesurer montée isolée sur la table de mesure, moyennant une simple liaison de cette touche avec cet amplificateur. Ainsi l'impulsion de mesure est produite à l'instant précis de l'entrée en contact de la touche du palpeur avec la pièce à mesurer avant tout déplacement relatif du palpeur par rapport au boîtier, comme cela est déjà connu par le brevet suisse cité mais ici sans l'inconvénient de la nécessité de la liaison par câble de la pièce à mesurer.

En outre le mécanisme de liaison spatiale liant le palpeur au boîtier ne collaborant pas à la création de l'impulsion de mesure par sa déformation élastique peut être de ce fait prévu d'une grande simplicité et à grand débattement élastique, ce qui est en particulier très avantageux dans l'application du dispositif de palpage à la mesure tridimensionnelle. L'impulsion électrique de sécurité provoquée ici par cette déformation élastique peut être utilisée soit comme signal d'attention pour l'opérateur qui sait ainsi que le signal de mesure n'a pas eu lieu pour cause de rencontre de la touche de mesure avec une impureté ou une partie isolante de la pièce à mesurer, soit comme signal de commande de l'arrêt automatique du déplacement du support mobile lorsque ce déplacement est télécommandé. Un autre avantage réside dans le fait qu'il est possible d'utiliser aussi bien l'impulsion de mesure que l'impulsion de sécurité pour arrêter automatiquement ce déplacement. En effet, l'utilisation de l'impulsion de mesure pour fournir à la fois une prise de donnée pour le calculateur de la machine et un signal de commande d'arrêt automatique du support du boîtier constitue une économie d'énergie appréciable due au système capacitif employé, la seconde impulsion de sécurité n'agissant alors qu'en cas de non production de l'impulsion de mesure et pour seulement une grande amplitude de la déformation élastique du mécanisme de liaison.

Dans une forme de réalisation avantageuse par sa simplicité et sa fiabilité, l'amplificateur capacitif comporte un dispositif sensoriel différentiel à effet de champ monté en bascule décalée et relié aux entrées d'un amplificateur opérationnel pour déceler le déplacement de charge de la touche du palpeur vers la pièce à mesurer par basculement du potentiel auxdites entrées.

Cette forme de réalisation de l'amplificateur capacitif permet également par une appropriation également simple de parer à tout signal de mesure erroné qui serait dû à des oscillations mécaniques du palpeur ou du support consécutives au freinage du déplacement de ce support ou bien à des trépidations de la machine à mesurer elle-même. A cet effet une entrée du dispositif sensoriel différentiel à effet de champ est reliée à un dispositif de décharge et de réglage de la tension de charge de la touche du palpeur piloté par une logique pour décharger électriquement la touche du palpeur et la pièce à mesurer de suite après le déplacement de charge décelé par le dispositif sensoriel et pour recharger ladite touche à la tension déterminée dès sa rupture de contact avec la pièce à mesurer et selon une constante de temps déterminée. De la sorte, on assure que le palpeur se recharge lentement à la tension désirée sans donner simultanément un signal supplémentaire consécutif à une oscillation parasite quelconque ayant lieu après l'émission initiale de l'impulsion de mesure.

Pour produire l'impulsion électrique de sécurité significative d'une déformation élastique du mécanisme de liaison du palpeur avec le boîtier, tout système traditionnel peut être appliqué mais, le fait que ce mécanisme ne participe pas à la création du signal de mesure et que le palpeur est relié à un circuit électrique, permet ici une réalisation particulièrement simple caractérisée en ce que le boîtier est relié à un pôle du circuit électrique, et en ce que l'agencement de sécurité comprend un tâteur élastique fixé au palpeur de manière à être entrainé par celui-ci lors d'une déformation élastique du mécanisme de liaison pour produire un signal de court-circuit par contact avec le boîtier. De la sorte le mécanisme de liaison joue le rôle d'un mécanisme de rappel d'un interrupteur et il n'est pas besoin d'installer de dispositif additionnel pour produire un tel signal.

Dans une conception également simple et d'encombrement minimal intéressante pour la miniaturisation de l'agencement de sécurité et se prêtant bien à une machine pour la mesure tridimensionnelle, cet agencement comporte un tâteur constitué par un tige flexible étendue avec un jeu radial déterminé dans un alésage du boîtier. De cette manière le palpeur fonctionne comme le bouton d'un interrupteur agissant dans n'importe quelle position horizontale ou verticale. En jouant sur les différences de diamètres entre ce fil flexible et cet alésage le débattement du mécanisme de liaison nécessaire à la production du signal de court-circuit peut être déterminé de la manière la plus optimalement simple.

Le dessin annexé représente, à titre d'exemple, une forme d'exécution de l'objet de l'invention appropriée à une machine pour la mesure tridimensionnelle.

La figure 1 en est une section schématique axiale.

La figure 2 est un schéma fonctionnel d'une partie caractérisque de son circuit électrique.

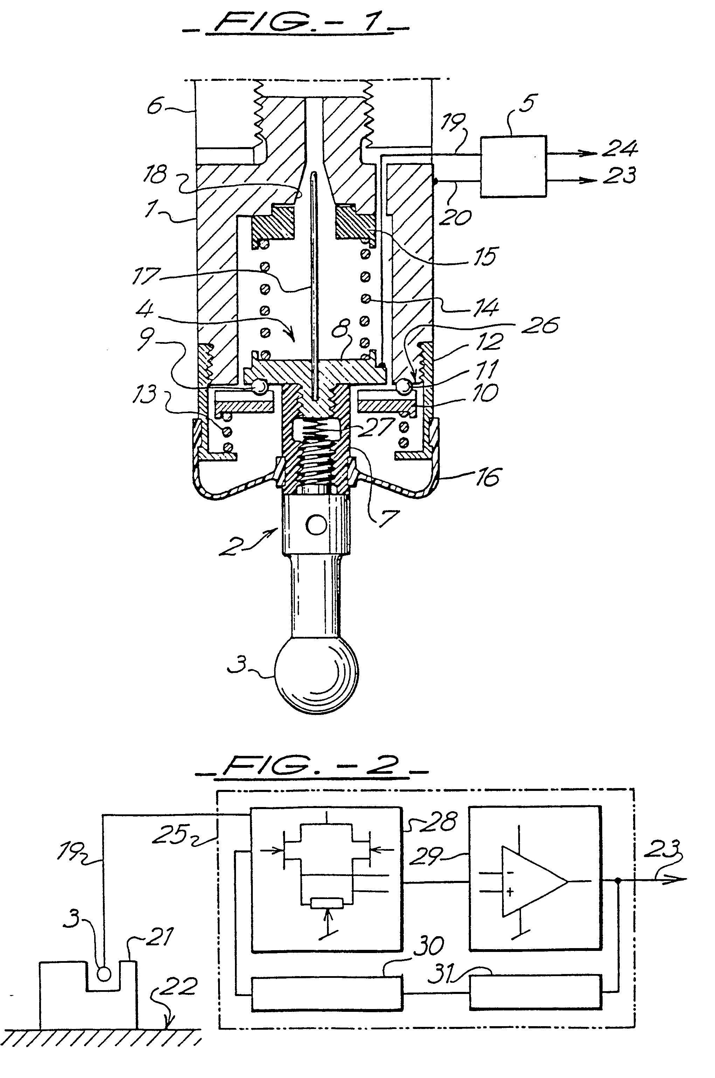

Le dispositif de palpage représenté figure 1 comprend dans son ensemble un boîter 1, un palpeur 2 à touche de mesure 3 solidaire du boîtier 1, un mécanisme de liaison spatiale 4 du palpeur 2 avec le boîtier 1 et un circuit électrique 5.

Le boîtier 1 est destiné à être fixé à un support mobile 6 relié au bras ou au portique d'une machine à mesurer non représentée, de manière à ce qu'une pièce à mesurer puisse être palpée par la touche de mesure 3 par déplacement du support mobile 6 au moins dans les directions des mesures à effectuer.

Le mécanisme de liaison 4 est ici réalisé comme suit:

A l'intérieur du boîtier du le palpeur 2 est fixé par l'intermédiaire d'un manchon isolant 7 à un premier flasque 8 d'un palier à trois billes 9 du type connu dit "support de Boys" centré sur un second flasque 10, d'un second palier à trois billes 11 du même type centré sur une embase circulaire 26 du boîtier 1. Un capot 12 vissé autour de cette embase 26 constitue l'appui d'un premier ressort de compression 13 maintenant le second flasque 10 pressé par ses billes 11 contre l'embase 26 en question. Au dessus de cet assemblage un second ressort de compression 14, en appui contre une rondelle isolante 15 interposée entre lui et le plafond du boîter 1 maintient le premier flasque 8 pressé par ses billes 9 contre le second flasque 10. Le premier ressort 13 est de raideur supérieure à celle du second ressort 14 de manière à ce que cet ensemble palier soit immobilisé spatialement par rapport au boîtier 1 et ces deux ressorts sont tarés de manière à ce qu'une déformation élastique de ce mécanisme de liaison ne se produise que pour un dépassement déterminé de la pression de mesure admise.

Cet agencement est protégé des agents extérieurs par une manchette en caoutchouc 16.

A l'intérieur du manchon isolant 7, qui joue ici également le rôle de fusible mécanique en cas de choc violent sur le palpeur 2, ce dernier est relié électriquement au premier flasque 8 par un ressort de compression 27 et ce flasque 8 comporte un tâteur élastique 17 constitué par une tige conductrice flexible étendue avec un certain jeu radial prédéterminé dans un alésage 18 pratiqué dans le plafond du boîtier 1.

Les billes 9 et 11 de l'ensemble palier sont réalisées en matériau isolant, par exemple en rubis, de sorte que le palpeur 2 ainsi lié mécaniquement au boîtier 1 se trouve isolé électriquement de ce dernier tant qu'une déformation élastique suffisante du dispositif de liaison n'est pas atteinte pour faire entrer en contact le tâteur 17 avec la paroi de l'alésage 18.

Par son système à deux paliers à billes et à deux ressorts en opposition le dispositif de liaison ainsi réalisé est déformable élastiquement dans les six directions correspondant aux deux sens de chacun des trois axes de coordonnées de référence d'une machine à mesurer tridimensionnelle.

Le palpeur 2 et le boîtier 1 de ce dispositif de palpage sont reliés par deux câbles 19 et 20 au circuit électrique 5. Ce circuit électrique, dont une partie caractéristique est représentée figure 2, est prévu pour être influencé par le contact de la touche de mesure 3 avec une pièce à mesurer conductrice 21 montée isolée électriquement sur une table de mesure 22, pour produire une impulsion électrique de mesure significative de l'entrée en contact de cette touche 3 avec cette pièce 21 par une première sortie 23, et pour produire par une seconde sortie 24 une impulsion électrique de sécurité significative d'une éventuelle déformation élastique du mécanisme de liaison 4.

Pour produire l'impulsion électrique de mesure le circuit électrique 5 comporte un amplificateur capacitif 25 dont le schéma fonctionnel est représenté figure 2, relié par le câble 19 et ensuite au travers du mécanisme de liaison 4 à la touche 3 du palpeur 2.

Cet amplificateur capacitif 25 est prévu pour précharger la touche 3 du palpeur 2 à une tension déterminée par exemple de 30 volts, et comporte des dispositifs électroniques sensibles à un déplacement de charge entre cette touche et la pièce à mesurer, ces dispositifs étant ici constitués par:

– un dispositif sensoriel différentiel à effet de champ 28 monté en balance décalée, constitué par exemple par un montage comprenant deux transistors à effet de champs décalés par un potentiomètre,
– et un amplificateur opérationnel 29 dont les deux entrées sont reliées au dispositif sensoriel 28 et dont la sortie 23 délivre l'impulsion de mesure en question.

Dans ce montage le dispositif sensoriel différentiel à effet de champ 28 décèle le déplacement de charge de la touche 3 du palpeur à la pièce à mesurer 21 qui se produit à l'instant de l'entrée en contact de ces deux éléments et provoque l'émission de l'impulsion de mesure à cet instant précis par basculement du potentiel aux entrées de l'amplificateur opérationnel 29.

Pour parer à d'éventuels signaux erronés qui seraient dus par exemple à des trépidations consécutives l'arrêt brutal du déplacement du support mobile 6 lors de l'impact de la touche de mesure 3 contre la pièce à mesurer 21, l'amplificateur capacitif 25 comporte ici outre, reliant la sortie de l'amplificateur opérationnel 29 à une entrée du dispositif sensoriel 28, un dispositif de décharge et de réglage 30 de la tension de charge de la touche 3 du palpeur piloté par une logique 31. Ce dispositif de décharge et de réglage 30 est piloté par la logique 31 pour décharger électriquement la touche du palpeur et la pièce à mesurer de suite après le déplacement de charge décelé par le dispositif sensoriel 28 et pour recharger progressivement ladite touche à la tension déterminée dès sa rupture de contact avec la pièce à mesurer et selon une constante de temps déterminée.

Le dispositif de décharge et de réglage 30 peut être constitué par exemple de manière simple par un montage comprenant un transistor piloté par la logique pour amener à une faible tension négative l'entrée de l'amplificateur opérationnel 29 et provoquer ainsi une décharge du palpeur et de la pièce à mesurer à zéro volt par une résistance de contre-couplage, dès la détection par un comparateur de l'émission de l'impulsion de mesure.

Le palpeur 2 et la pièce à mesurer 21 étant ainsi déchargés électriquement dès la première rupture de contact entre eux et la charge ne remontant alors que progressivement selon une constante de temps, cette constante de temps peut être déterminée pour assurer que toute reprise de contact rapide consécutive à une oscillation mécanique ne donnera pas de signal supplémentaire erroné.

La plus grande précision est ainsi assurée dans la détection du point de palpage de la pièce à mesurer.

Pour produire l'impulsion électrique de sécurité par sa seconde sortie 24, le circuit électrique 5 comporte des éléments sensibles à un court-circuit reliés par le câble de masse 20 au boîtier 1 et par le câble d'alimentation 19 du palpeur au tâteur 17 au travers du premier flasque 8 du mécanisme de liaison 4.

Il est évident que d'autres moyens peuvent être utilisés pour produire un signal de sécurité significatif d'une déformation élastique du mécanisme de liaison, tels que par exemple un capteur de déplacement ou bien un interrupteur dont le corps serait fixé au boîtier et l'organe mobile à un élément approprié du mécanisme de liaison. Cependant le mode de création de ce signal par un court-circuit utilisé ici de manière simple et avec le minimum de moyens constitués par le tâteur 17 et l'alésage 18 le fait que le palpeur 2 est déjà relié par le câble 19 à l'un des deux pôles du circuit électrique 5 pour produire le signal de mesure. Ceci est avantageux à la fois pour une miniaturisation poussée et pour la fiabilité du dispositif.

Outre sa destination pour le calculateur par la sortie 23 du circuit 5, l'impulsion de mesure est également dirigée sur un dispositif d'ordre ou de commande de l'arrêt du déplacement du palpeur 2, non représenté, sur lequel par ailleurs est également dirigée par la sortie 24 l'impulsion de sécurité.

Lors d'une prise de mesure par contact de la touche 3 du palpeur 2 sur la pièce à mesurer 21, l'impulsion de mesure produite par l'amplificateur capacitif fournit ainsi à la fois une donnée pour le calculateur et un ordre ou une commande de l'arrêt du déplacement du dispositif de palpage. Le processus de freinage n'est toutefois pas instantané et le palpeur 3 doit effectuer encore un certain déplacement jusqu'à l'arrêt total du dispositif de palpage et ce déplacement est pris ici en compte par la déformation élastique du mécanisme de liaison 4 avant que le tâteur 17 ne vienne en contact avec la paroi de l'alésage 18, et ceci par un dimensionnement approprié du jeu axial entre ces deux éléments. Il est en effet avantageux de ne pas utiliser systématiquement l'impulsion de sécurité pour arrêter ce déplacement après l'émission de l'impulsion de mesure pour des raisons d'économie d'énergie.

S'il ne se produit pas d'impulsion de mesure par exemple pour cause d'entrée en contact de la touche de mesure 3 avec une impureté ou un élément isolant de la pièce à mesurer 21, le déplacement du palpeur est alors arrêté par le signal de court-circuit généré par la rencontre du tâteur 17 avec l'alésage 18, et aucun dommage ne s'ensuit pour l'ensemble du dispositif de palpage.

Il est tenu compte du déplacement résiduel provoqué par ce freinage retardé dans la détermination de l'amplitude du déplacement élastique libre du mécanisme de liaison 4 et de la déformation élastique du tâteur 17.

En variante non représentée du circuit électrique 5, une électronique peut être prévue pour recevoir à la fois le signal de mesure et le signal de sécurité, pour distinguer ces deux types de signaux et pour donner des impulsions correspondantes au calculateur et au dispositif de freinage.

En variante également non représentée du mécanisme de liaison 4, tout autre système de liaison spatiale susceptible d'être déformé élastiquement peut être appliqué, tel que par exemple ceux des dispositifs des documents cités Nos 2 303 267 et 3 945 124, avec pour avantage sur ceux-ci qu'il n'est plus besoin d'une aussi grande précision dans leur exécution du fait qu'ils ne participent plus ici à la création de l'impulsion de mesure, mais seulement à celle de l'impulsion de sécurité.

La forme d'exécution donnée ici en exemple pour une machine à mesurer tridimensionnelle n'est évidemment pas limitative et l'invention est également applicable avec ses avantages aux machines-outils ou aux machines à mesurer selon un seul ou selon deux axes référentiels de coordonnées. Dans ces cas, le mécanisme de liaison spatiale du palpeur avec le boîtier peut être différencié dans le sens d'une simplification, par suppression de deux ou de quatre degrés de libertés sur six dans ses déplacements élastiques.

## Revendications

1. Dispositif de palpage pour une machine à mesurer des pièces conductrices montées sur une table de mesure et isolées de celle-ci et comportant un boîtier destiné à être fixé à un support mobile de la machine, un palpeur à touche de mesure solidaire du boîtier et destiné à palper une pièce à mesurer par déplacement du support mobile, un mécanisme de liaison spatiale du palpeur avec le boîtier susceptible d'être déformé élastiquement sous l'effet d'un dépassement d'une pression déterminée de la touche du palpeur contre la pièce à mesurer et un circuit électrique influencé par le contact de la touche du palpeur contre la pièce à mesurer pour produire une implusion électrique, caractérisé en ce que la touche (3) du palpeur (2) est isolée par rapport au boîtier (1), en ce que le circuit électrique (5) comprend un amplificateur capacitif (25) relié à la touche (3) du palpeur (2) pour précharger celle-ci à une tension déterminée et comporte des dispositifs électroniques (28, 29) sensibles à un déplacement de charge entre la touche du palpeur et la pièce à mesurer pour produire une impulsion électrique de mesure significative de l'entrée en contact de la touche du palpeur avec la pièce à mesurer, et en ce qu'un agencement de sécurité (17, 18) sensible à la déformation élastique du mécanisme de liaison produit une impulsion électrique de sécurité significative d'une éventuelle déformation élastique de ce mécanisme.

2. Dispositif selon la revendication 1, caractérisé en ce que l'amplificateur capacitif (25) comporte un dispositif sensoriel différentiel à effet de champ (28) monté en balance décalée et relié aux entrées d'un amplificateur opérationnel (29) pour déceler le déplacement de charge de la touche du palpeur vers la pièce à mesurer par basculement du potentiel auxdites entrées.

3. Dispositif selon la revendication 2, caractérisé en ce qu'une entrée du dispositif sensoriel différentiel à effet de champ (28) est reliée à un dispositif de décharge et de réglage (30) de la tension de charge de la touche du palpeur piloté par une logique (31) pour décharger électriquement la touche du palpeur et la pièce à mesurer de suite après le déplacement de charge décelé par le dispositif sensoriel à effet de champ et pour recharger progressivement ladite touche à la tension déterminée dès sa rupture de contact avec la pièce à mesurer et selon une constante de temps déterminée.

4. Dispositif selon la revendication 1, caractérisé en ce que le boîtier (1) est relié à un pôle du circuit électrique, et en ce que l'agencement de sécurité comprend un tâteur élastique (17) fixé au palpeur de manière à être entraîné par celui-ci lors d'une déformation élastique du mécanisme de liaison pour produire un signal de courtcircuit par contact avec le boîtier.

11

5. Dispositif selon la revendication 4, caractérisé en ce que le tâteur élastique (17) est constitué par une tige flexible étendue avec un jeu radial dans un alésage (18) du boîtier.

**Patentansprüche**

1. Abtastvorrichtung für eine Maschine zum Vermessen von auf einem Meßtisch, isoliert von demselben, montierten leitenden Werkstücken, mit einem auf einem beweglichen Halter der Maschine befestigbaren Gehäuse, einem mit dem Gehäuse fest verbundenen Fühler mit Meßkopf, der zum Abtasten eines zu vermessenden Werkstücks durch Verschieben des beweglichen Halters bestimmt ist, einem Verbindungsmechanismus zur räumlichen Verbindung des Fühlers mit dem Gehäuse, der bei Überschreitung eines vorbestimmten Druckes des Meßkopfes des Fühlers gegen das zu vermessende Werkstück elastisch verformbar ist, und einer durch den Kontakt des Meßkopfes des Fühlers mit dem zu vermessenden Werkstück beeinflußten elektrischen Einrichtung zur Erzeugung eines elektrischen Impulses, dadurch gekennzeichnet, daß der Meßkopf (3) des Fühlers (2) gegenüber dem Gehäuse (1) isoliert ist, daß die elektrische Einrichtung (5) einen Kapazitiven Verstärker (25) aufweist, der mit dem Meßkopf (3) des Fühlers (2) zum Voraufladen desselben mit einer bestimmten Spannung verbunden ist und der elektronische Vorrichtungen (28, 29) enthält, die auf eine Ladungsverschiebung zwischen dem Meßkopf des Fühlers und dem zu vermessenden Werkstück ansprechen, zur Erzeugung eines elektrischen Meßimpulses, der für das Inkontaktkommen des Meßkopfes des Fühlers mit dem zu vermessenden Werkstück signifikant ist, und daß eine Sicherheitseinrichtung (17, 18), die auf die elastische Verformung des Verbindungsmechanismus anspricht, einen elektrischen Sicherheits-Impuls erzeugt, der für eine eventuelle elastische Verformung dieses Verbindungsmechanismus signifikant ist.

2. Vorrichtung nach Anspruch 1 dadurch gekennzeichnet, daß der kapazitive Verstärker (25) eine differentielle Sensoreinrichtung mit Feldeffekt (28) aufweist, welche in versetzter Balance angeordnet und mit den Eingängen eines Operationsverstärkers (29) verbunden ist, zum Nachweis der Ladungsverschiebung von dem Meßkopf des Fühlers zum zu vermessenden Werkstück hin durch Kippen des Potentials an diesen Eingängen.

3. Vorrichtung nach Anspruch 2, dadurch gekennzeichnet, daß ein Eingang der differentiellen Sensoreinrichtung mit Feldeffekt (28) mit einer durch eine Logik (31) gesteuerten Entladungs- und Regelvorrichtung (30) für die Ladespannung des Meßkopfes des Fühlers verbunden ist, um den Meßkopf des Fühlers und das zu vermessende Werkstück anschließend an die durch die Sensoreinrichtung mit Feldeffekt nachgewiesene

12

Ladungsverschiebung elektrisch zu entladen und den Meßkopf von der Unterbrechung seines Kontaktes mit dem zu vermessenden Werkstück an und innerhalb einer vorbestimmten Zeitkonstante progressiv auf die vorbestimmte Spannung wieder aufzuladen.

4. Vorrichtung nach Anspruch 1 dadurch gekennzeichnet, daß das Gehäuse mit einem Pol der elektrischen Einrichtung verbunden ist und daß die Sicherheitseinrichtung einen elastischen Taster (17) aufweist, der an dem Fühler derart befestigt ist, daß er von diesem bei einer elastischen Deformation des Verbindungsmechanismus mitgenommen wird und durch Kontakt mit dem Gehäuse ein Kurzschlußsignal erzeugt.

5. Vorrichtung nach Anspruch 4, dadurch gekennzeichnet, daß der elastische Taster (17) aus einem flexiblen Stift gebildet ist, der sich mit radialem Spiel in eine Bohrung (18) des Gehäuses erstreckt.

**Claims**

1. A sensing device for a machine for measuring conductive parts mounted on a measuring table and insulated from this, and comprising a casing adapted to be fixed to a mowable support of the machine, a sensor with a measuring tip rigidly connected to the casing and adapted to sense a part to be measured by displacement of the mowable support, a mechanism for the spatial connection of the sensor to the casing, adapted to be deformed resiliently under the effect of exceeding a given pressure of the tip of the sensor on the part to be measured, and an electrical circuit influenced by the contact between the tip of the sensor and the part to be measured, to produce an electric pulse, characterised in that the tip (3) of the sensor (2) is insulated with respect to the casing (1), in that the electrical circuit (5) comprises a capacitive amplifier (25) connected to the tip (3) of the sensor (2) to precharge this to a given voltage and comprises electronic devices (28, 29) sensitive to a displacement of charge between the tip of the sensor and the part to be measured to produce an electrical measuring pulse signifying the coming into contact of the tip of the sensor with the part to be measured, and in that a safety arrangement (17, 18) sensitive to the resilient deformation of the connecting mechanism produces an electrical safety pulse signifying a possible resilient deformation of this mechanism.

2. A device according to Claim 1, characterised in that the capacitive amplifier (25) comprises a fieldeffect differential sensory device (28) connected out of balance and connected to the inputs of an operational amplifier (29) to detect the displacement of charge from the tip of the sensor to the part to be measured by fluctuation of the potential at said inputs.

3. A device according to Claim 2, characterised in that one input of the field-effect differential sensory device (28) is connected to a device (30) for discharging and controlling the charging voltage of the tip of the sensor, controlled by a logic (31) to discharge electrically the tip of the sensor and the part to be measured immediately after the displacement of charge detected by the field-effect sensory device and to recharge said tip progressively to the given voltage immediately after its contact with the part to be measured is broken and in accordance with a given time constant.

4. A device according to Claim 1, characterised in that the casing (1) is connected to one pole of the electrical circuit and in that the safety arrangement comprises a resilient feeler (17) fixed to the sensor in such a manner as to be entrained by this on a resilient reformation of the connecting mechanism, to produce short-circuit signal by contact with the casing.

5. A device according to Claim 4, characterised in that the resilient feeler (17) consists of a flexible rod extending with radial play into a bore (18) of the casing.

_FIG. - 1_

_FIG. - 2_